# EUROPÄISCHE PATENTSCHRIFT

(11) **EP 1 454 511 B1**
(45) Veröffentlichungstag und Bekanntmachung des Hinweises auf die Patenterteilung: **09.05.2007**
(21) Anmeldenummer: 02792648.4
(22) Anmeldetag: 05.12.2002
(51) Int. Cl.: H05B 37/00

(54) **SCHALTUNGSANORDNUNG ZUM BETREIBEN EINES LEUCHTZEICHENS**
CIRCUIT ASSEMBLY FOR OPERATING A LUMINOUS SIGNAL
CIRCUIT PERMETTANT DE FAIRE FONCTIONNER UN VOYANT LUMINEUX

(30) Priorität: 14.12.2001 DE 10164561
(43) Veröffentlichungstag der Anmeldung: 08.09.2004
(73) Patentinhaber: SIEMENS AKTIENGESELLSCHAFT, 80333 München (DE)
(72) Erfinder: PÖPPLOW, Norbert, 15732 Eichwalde (DE); ZIMMERMANN, Dirk, 13053 Berlin (DE)
(86) Internationale Anmeldenummer: PCT/DE2002/004505
(87) Internationale Veröffentlichungsnummer: WO 2003/053110

(56) Entgegenhaltungen:
- EP-A- 0 293 921
- DE-A- 19 846 753
- DE-C- 19 618 010
- US-A- 5 939 839

## Beschreibung

Die Erfindung betrifft eine Schaltungsanordnung zum Betreiben eines Leuchtzeichens gemäß dem Oberbegriff des Anspruchs 1. Leuchtzeichen auf der Basis von Leuchtdioden anstelle von Glühlampen werden in vielen Bereichen, insbesondere in der Signaltechnik zunehmend angewendet. Leuchtdioden sind vergleichsweise preiswert, langlebig und lichtstark. Eine Schaltung zum Schutz der Leuchtdioden eines Lichtsignals gegen Überspannung ist aus der US-A 5,939,839 bekannt. Die EP-A 0 293 921 betrifft eine Schutzschaltung gegen Überhitzung.

Schwierig ist der Einsatz von Leuchtdioden jedoch dort, wo ohne Änderungen der Ansteuerung die Glühlampen gegen LED-Leuchtzeichen umgerüstet werden sollen. Besonders gilt dieses für Lichtsignalschaltungen der Eisenbahnen, bei welchen die ordnungsgemäße Funktion in der Regel durch eine signaltechnisch sichere Strommessung überwacht wird. Um diese Überwachung ohne Änderung weiter verwenden zu können, muss die Strom-Spannungs-Kennlinie des LED-Leuchtzeichens annähernd der einer Glühlampe entsprechen.

Eine weitere Besonderheit ist die Signalisierung'außerhalb von Tunneln oder Umgebungsbedingungen mit annähernd konstanten Lichtverhältnissen. Hier ist schaltungstechnisch eine Absenkung der Lichtleistung für den Nachtbetrieb gegenüber dem Tagbetrieb zu realisieren. Die Lichtempfindlichkeit des menschlichen Auges unterscheidet sich am Tage von der Lichtempfindlichkeit in der Nacht ca. um den Faktor 1000. Ohne Nachtabsenkung der Lichtleistung kann es deshalb zu Blendungen auch bei Lichtern kommen, welche am Tage kaum zu sehen Nacht über die Speisespannung bzw. den Speisestrom vom Stellwerk gesteuert. Da die Lichtleistung einer Glühlampe exponentiell von der Speisespannung bzw. dem Speisestrom abhängt, führt eine kleine Änderung des Speisestromes bzw. der Speisespannung zu einer großen Änderung der Lichtleistung. Das bedeutet, dass für die Absenkung der Lichtleistung z. B. auf 20 % der Ausgangslichtstärke nur eine Reduzierung des Speisestromes bzw. der Speisespannung auf ca. 2/3 des Ausgangswertes notwendig ist.

Um bei Leuchtdioden einen ähnlich günstigen Kennlinienverlauf zu erreichen, wurde gemäß der DE 198 46 753 A1 vorgeschlagen, zu jeder Leuchtdiode eine Ansteuerschaltung parallel zu schalten. Nachteilig ist, dass der erreichbare Unterschied zwischen der Lichtleistung am Tag und in der Nacht relativ gering ist. Außerdem werden Bauelementetoleranzen, die zu unterschiedlichen Flussspannungen der Leuchtdioden, Transistoren und anderer Bauelemente führen sowie der Temperatureinfluss auf die Flussspannungen nicht kompensiert.

Aus der EP 0 293 921 A2 wie auch aus der US 5,939,839 sind LED-Schaltungen zur Begrenzung des LED-Stromes mittels einer gesteuerten Stromquelle bekannt. Tag-Nacht-Umschaltung ist nicht vorgesehen.

Der Erfindung liegt die Aufgabe zugrunde, eine Schaltungsanordnung der gattungsgemäßen Art anzugeben, die eine erhöhte Dynamik zwischen Tag- und Nachtlichtleistung ermöglicht.

Die Aufgabe wird erfindungsgemäß mit den kennzeichnenden Merkmalen des Anspruchs 1 gelöst. Durch die Vorgabe des Parallelstromes, der nicht durch die Leuchtdiode fließt, lässt sich die Lichtleistung der Leuchtdioden in einem sehr weiten Bereich steuern.

Eine konstante Bestromung der Leuchtdiode unabhängig von der Betriebsspannung im Tag- bzw. Nachtspannungsbereich ergibt sich mittels der zweiten gesteuerten Stromquelle zur Vorgabe des Leuchtdiodenstromes.

Für den zu steuernden Parallelstrom und für den zu steuernden Leuchtdiodenstrom wird mittels eines Operationsverstärkers bzw. Komparators ein Soll-Istwertvergleich durchgeführt. Die Sollwertvorgabe des jeweiligen Stromes erfolgt dabei von vordefinierten Schaltschwellen, welche vorgeben, wann die entsprechenden Ströme ein- bzw. auszuschalten sind. Die Schaltschwellen können analoge kontinuierliche Vorgaben oder aber rein digitale Informationen sein, vorzugsweise dann mit einer Hysterese ausgestattet.

Bei einer vorteilhaften Weiterbildung gemäß Anspruch 3 ist die Schaltschwelle von einer Temperaturkompensation und/oder einer Flussspannungskompensation beaufschlagt. Von der Temperaturkompensation werden Bauteileigenschaften ausgeglichen, welche sich in Abhängigkeit von der Temperatur ändern. Die Flussspannungskompensation gleicht unterschiedliche Flussspannungen der verwendeten Leuchtdioden aus. Vorstellbar ist beispielsweise, dass die verwendeten Leuchtdioden in Flussspannungsgruppen eingeteilt werden, aus denen bei der Bestückung die passenden Leuchtdioden ausgewählt werden.

Eine wichtige Eigenschaft der Gesamtanordnung besteht gemäß Anspruch 4 darin, dass diese schon bei kleinen Spannungen einen Strom treiben kann. Diese Funktion stellt einen Schutz der Schaltungsanordnung gegenüber eingekoppelter Fremdenergie dar, welche bei einer Speisung der Schaltungsanordnung über eine längere Entfernung auftreten kann. Auch bei maximal anzunehmender eingekoppelter Fremdenergie muss die sich über die Leuchtdiode aufbauende Spannung kleiner als die Flussspannung der Leuchtdiode bleiben. Dadurch wird verhindert, dass die Leuchtdiode bei Fremdenergieeinfluss - Störspannung - unzulässig zu leuchten beginnt.

Die Erfindung wird nachfolgend anhand figürlicher Darstellungen näher erläutert. Es zeigen:
Figur 1 ein Prinzipschaltbild einer Schaltungsanordnung zum Betreiben eines Leuchtzeichens,
Figur 2 eine erste Ausführungsform einer Ansteuerschaltung,
Figur 3 einen Kennlinienverlauf der Ansteuerschaltung nach Figur 2,
Figur 4 eine zweite Ausführungsform einer Ansteuerschaltung und
Figur 5 einen Kennlinienverlauf einer Ansteuerschaltung nach Figur 4.

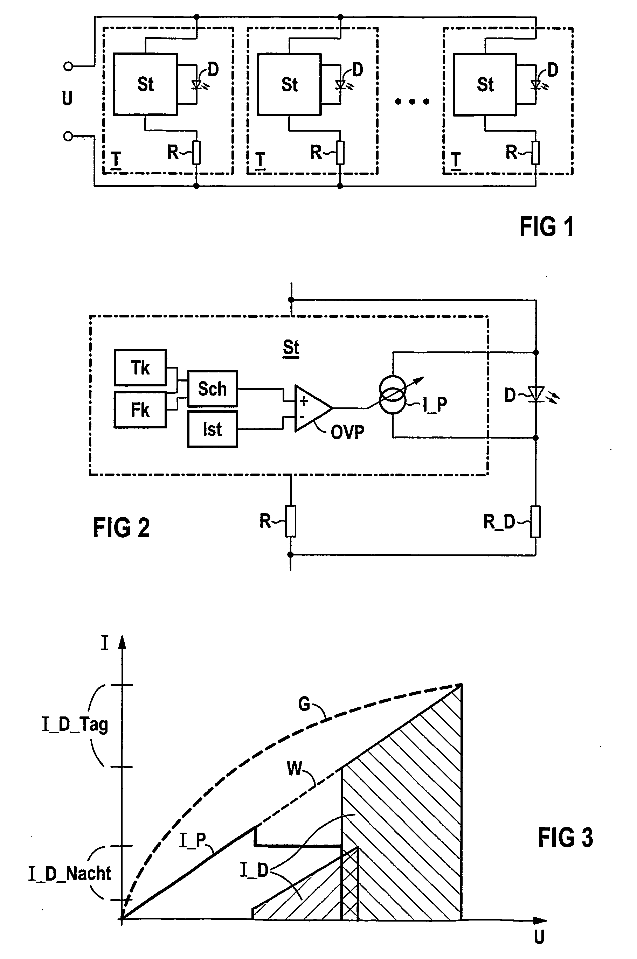

Figur 1 veranschaulicht den allgemeinen Aufbau eines LED-Signals mit n Treibern T, wobei jeder Treiber T mindestens eine LED D steuert. Zu den LEDs D ist jeweils mindestens eine LED-Steuerung St parallel geschaltet. Die LED-Steuerung St ist mit einem Pol direkt mit der Betriebsspannung U verbunden, während der andere Pol in Reihe mit einem Widerstand R an der Betriebsspannung U anliegt. Der Widerstand R zeichnet sich durch definiertes Ausfallverhalten aus, d. h., dass bestimmte Defekte, beispielsweise vollständige Kurzschlüsse so unwahrscheinlich sind, dass sie praktisch nicht auftreten. Die Widerstände R sind weiterhin derart ausgelegt, dass Fehler, beispielsweise Kursschluss der LED D bzw. der LED-Steuerung St sich nur geringfügig auf die Gesamtstromaufnahme der Schaltungsanordnung auswirken. Zum Beispiel würde sich bei einem Kurzschluss der LED-Steuerung St bei einem LED-Signal mit 60 Treibern T der Gesamtstrom nur um ca. 5 % erhöhen.

Eine erste Ausführungsform eines Treibers T als Detail des LED-Signals nach Figur 1 ist in Figur 2 dargestellt. Von der LED-Steuerung St wird ein Strom I_P parallel zur LED D gesteuert. Dazu dient eine gesteuerte Stromquelle. Ein Komparator, hier ein Operationsverstärker OPV, ist eingangsseitig mit einer Schaltschwelle Sch, die einen Sollwert repräsentiert, und mit einem Istwertgeber Ist verbunden. Ausgangsseitig beaufschlagt der Operationsverstärker OPV einen Parallelzweig zur LED D. Die Schaltschwellen Sch geben vor, wann der Parallelstrom I_P für einen Tagbetrieb bzw. einen Nachtbetrieb bzw. einen Leerlauf zu schalten ist. Die Schaltschwelle Sch ist ihrerseits mit einer Temperaturkompensation Tk und einer Flussspannungskompensation Fk beaufschlagt. Die Temperaturkompensation Tk gleicht temperaturabhängige Bauteileigenschaften aus, während die Flussspannungskompensationen Fk LED-spezifische Flussspannungen berücksichtigt. Der Istwertgeber

Ist verarbeitet die Betriebsspannung U bzw. den Betriebsstrom des ganzen LED-Signals, wobei die Istwertvorgabe durch weitere Informationen, wie zusätzliche Steuerleitungen von einem Stellwerk oder aber durch Informationen, welche im Speisestrom oder in der Speisespannung U verschlüsselt sind, erfolgt. Die Stromquelle für den Parallelstrom I_P ist derart aufgebaut, dass diese schon bei kleinen Spannungen einen Strom treiben kann. Dadurch wird eingekoppelte Fremdenergie, deren Größenordnung ganz wesentlich von der Länge der Speiseleitung abhängt, derart kurzgeschgeschlossen, dass sich keine hohe Spannung aufbauen kann, und die LEDs D durch die Fremdenergie nicht zu leuchten beginnen.

In Figur 3 ist der speisespannungsabhängige Stromverlauf des Parallelstromes I_P und des die LED D durchfließenden Stromes I_D im Vergleich zu einer herkömmlichen Glühlampe G dargestellt. Die Figur zeigt eine durch die Widerstände R festgelegte Widerstandsgerade W, die entstehen würde, wenn ausschließlich die Widerstände R und keine Treiber T und LEDs D vorhanden wären. Die Widerstandsgerade W beschreibt den maximal möglichen Stromfluss durch die Schaltungsanordnung gemäß Figur 2 in Abhängigkeit von der Betriebsspannung U. Bei dieser Schaltungsausführung wird eine Nachtspannungsabsenkung über die Steuerung des Parallelstromes I_P realisiert. Aus Figur 3 ist ersichtlich, dass der LED-Strom I_D weder im Tagnoch im Nachtspannungsbereich konstant ist.

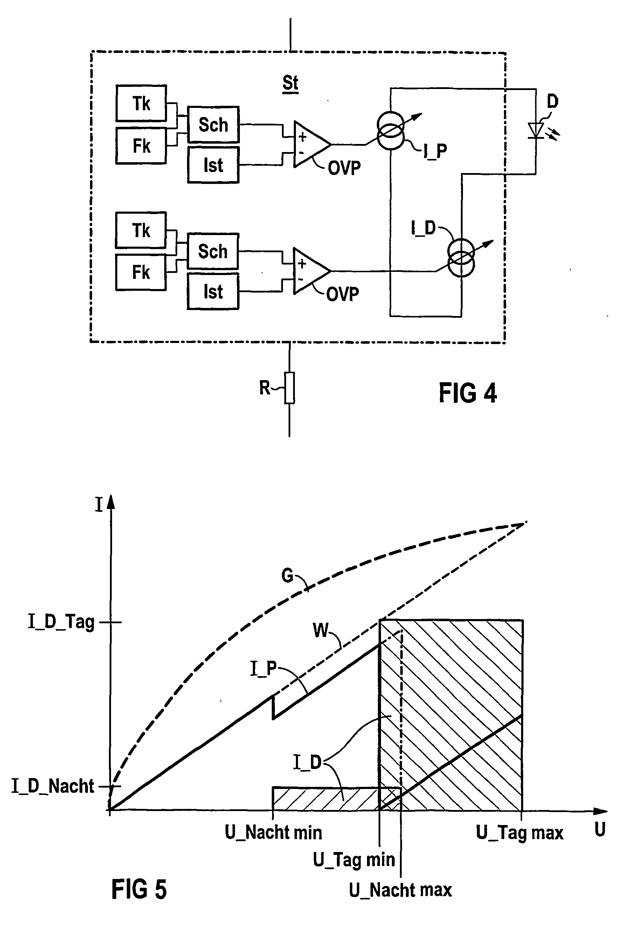

Um einen konstanten Stromfluss zu erreichen, ist eine Schaltungsausführung mit zusätzlicher LED-Stromsteuerung geeignet. Eine solche Schaltungsanordnung zeigt Figur 4. Dabei wird der Parallelstrom I_P und zusätzlich auch der LED-Strom I_D mittels gesteuerter Stromquellen gesteuert. Der zugehörige Stromverlauf ist in Figur 5 dargestellt. Der eingestellte Strom und damit die Signalhelligkeit sind idealerweise bei Tagbetrieb und auch bei Nachtbetrieb konstant.

Bei ausgeschaltetem Signal 0 < = U_Nacht min leuchtet das Signal auch bei eingekoppelter Fremdenergie nicht. Der LED-Strom I_D ist = 0. Der Parallelstrom I_P entspricht jedoch idealerweise dem maximal möglichen Strom. Durch diesen Parallelstrom I_P wird eingekoppelte Fremdenergie kurzgeschlossen, so dass sich keine Spannung aufbauen kann, welche die LEDs D zum Leuchten bringt.

Im Nachtbetrieb U_Nacht min < = U_Nacht max wird von der LED-Steuerung St der LED-Strom I_D = I_D_Nacht durch die LED D getrieben. Die LEDs D leuchten mit geringer Lichtleistung. Der Parallelstrom I_P entspricht idealerweise der Differenz zwischen dem Strom, der durch die Widerstände R festgelegt wird und dem LED-Strom I_D.

Bei Tagbetrieb U_Tag min < = U_Tag max wird von der LED-Steuerung St der LED-Strom I_D = I_D_Tag durch die LED D getrieben. Die LEDs D leuchten mit maximaler Lichtleistung. Der Parallelstrom I_P entspricht wiederum der Differenz zwischen dem Strom, welcher durch die Widerstände R festgelegt wurde und dem LED-Strom I_D.

Im Überlappungsbereich zwischen Tag- und Nachtbetrieb wirkt die Hysterese für Parallelstrom I_P und LED-Strom I_D, damit das LED-Signal in einem stabilen Zustand verharrt.

Die Schaltungsanordnung gemäß Figur 4 stellt eine sehr komfortable Ausführungsform dar. Das LED-Signal ist sicher im signaltechnischen Sinn, besitzt eine hohe Stabilität, ist nahezu frei von Temperatur- und Bauelementeschwankungen und stellt eine sehr hohe Dynamik zwischen Tag- und Nachtbetrieb zur Verfügung. Dieser Komfort erfordert jedoch einen entsprechend hohen schaltungstechnischen Aufwand. Diesem hohen Aufwand ist vorzugsweise mit integrierter Technik zu begegnen. Auch sind abgerüstete Varianten denkbar, welche mit geringerem Aufwand nur Teilfunktionalitäten realisieren.

Eine Ausführungsform berücksichtigt die Tatsache, dass am Tage die maximal mögliche Lichtleistung erzielbar sein soll, in der Nacht jedoch die Lichtleistung auf ein festgelegtes Maß begrenzt wird. Dazu wird nur im Bereich zwischen U_Nacht min und U_Nacht max der LED-Strom I_D konstant gehalten, während im Bereich zwischen U_Tag min und U_Tag max der maximal mögliche LED-Strom I_D bei I_P = 0 getrieben wird.

Eine weitere Ausführungsform betrifft die Auslegung für Gleich- und Wechselspannung. Dazu sind die LED-Steuerungen St mit entsprechenden Gleichrichterdioden auszustatten. Für den Betrieb bei Wechselspannung ist es sinnvoll, die LED-Steuerung St derart auszulegen, dass nicht Augenblickswerte der Istwerte für den Vergleich mit den Sollwerten genutzt werden, sondern vorzugsweise Effektivwerte.

Es ist weiterhin möglich, eine LED-Steuerung St sowohl für Gleichspannung als auch für Wechselspannung auszulegen, da eine LED-Steuerung St für Wechselspannung auch im Gleichspannungsbetrieb funktioniert. Hierbei ist jedoch zu beachten, dass eventuell unterschiedliche Schaltschwellen Sch benötigt werden. Durch eine von außen zugängliche Programmierung kann auf die benötigte Spannungsart umgeschaltet werden.

## Patentansprüche

1. Schaltungsanordnung zum Betreiben eines LED-Signals mit n Treibern (T), wobei jeder Treiber (T) eine Steuerung (St) zum Ansteuern mindestens einer Leuchtdiode (D) aufweist und wobei jede Steuerung (St) über einen in Reihe geschalteten Widerstand (R) mit der Betriebsspannung (U) des LED-Signals verbunden ist, wobei jede Steuerung (St) eine in einem Bypasszweig zur mindestens einen Leuchtdiode (D) angeordnete erste Stromquelle zur Vorgabe eines den durch die mindestens eine Leuchtdiode (D) fließenden Strom (I D) reduzierenden Parallelstromes (I_P) aufweist, **dadurch gekennzeichnet, dass** jede erste Stromquelle gesteuert wird und einen Komparator aufweist, dessen Eingänge von einer Schaltschwelle (Sch) und einem Istwertgeber (Ist) beaufschlagt sind.

2. Schaltungsanordnung nach Anspruch 1,
**dadurch gekennzeichnet,**
**dass** eine zweite gesteuerte Stromquelle zur Vorgabe eines durch die mindestens eine Leuchtdiode (D) fließenden Stromes (I_D) vorgesehen ist, wobei die zweite gesteuerte Stromquelle einen Komparator aufweist, dessen Eingänge von einer Schaltschwelle (Sch) und einem Istwertgeber (Ist) beaufschlagt sind.

3. Schaltungsanordnung nach einem der vorangehenden Ansprüche,
**dadurch gekennzeichnet,**
**dass** die Schaltschwelle (Sch) von einer Temperaturkompensation (Tk) und/oder einer Flussspannungskompensation (Fk) beaufschlagt ist.

4. Schaltungsanordnung nach einem der vorangehenden Ansprüche,
**dadurch gekennzeichnet,**
**dass** die zur Parallelstromvorgabe vorgesehene erste Stromquelle Mittel zum Treiben eines Stromes derart aufweist, dass bei maximal zu erwartender eingekoppelter Fremdenergie die sich über die mindestens eine Leuchtdiode (D) aufbauende Spannung kleiner als die Flussspannung der Leuchtdiode (D) ist.

## Claims

1. Circuit arrangement for operating an LED signal having n drivers (T), with each driver (T) having a controller (St) for actuation of at least one light-emitting diode (D), and with each controller (St) being connected via a series-connected resistor (R) to the operating voltage (U) for the LED signal, with each controller (St) having a first current source, which is arranged in a bypass path to the at least one light-emitting diode (D), for presetting a parallel current (I_P) which reduces the current (I_D) flowing through the at least one light-emitting diode (D), **characterized in that** each first current source is controlled and has a comparator, to whose inputs a switching threshold (Sch) and an actual value sensor (Act) are applied.

2. Circuit arrangement according to Claim 1,
**characterized**
**in that** a second controlled current source is provided in order to preset a current (I_D) flowing through the at least one light-emitting diode (D), with the second controlled current source having a comparator, to whose inputs a switching threshold (Sch) and an actual value sensor (Act) are applied.

3. Circuit arrangement according to one of the preceding claims,
**characterized**
**in that** the switching threshold (Sch) is acted on by temperature compensation (Tk) and/or forward voltage compensation (Fk).

4. Circuit arrangement according to one of the preceding claims,
**characterized**
**in that** the first current source is provided in order to preset the parallel current, and has means for driving a current such that, with the maximum external energy that can be expected to be input, the voltage which builds up across the light-emitting diode (D) is less than the forward voltage of the light-emitting diode (D).

## Revendications

1. Circuit pour faire fonctionner un voyant à diode électroluminescente, comprenant n étages (T) d'attaque, chaque étage (T) d'attaque ayant une commande (St) pour commander au moins une diode (D) électroluminescente et la tension (U) de fonctionnement du voyant à diode électroluminescente étant appliquée à chaque commande (St) par l'intermédiaire d'une résistance (R) montée en série, chaque commande (St) ayant une première source de courant disposée dans une branche en dérivation pour au moins une diode (D) électroluminescente, afin de prescrire un courant (I_P) parallèle réduisant le courant (I_D) passant dans la au moins une diode (D) électroluminescente, **caractérisé en ce que** la première source de courant est commandée et a un comparateur dont les entrées peuvent être alimentées par un seuil (Sch) de commutation et par un indicateur (Ist) de valeur réelle.

2. Circuit suivant la revendication 1,
**caractérisé**
**en ce qu'**il est prévu une deuxième source de courant commandée, afin de prescrire un courant (I_D) passant dans la au moins une diode (D) électroluminescente, la deuxième source de courant commandée ayant un comparateur dont les entrées peuvent être alimentées par un seuil (Sch) de commutation et par un indicateur (Ist) de valeur réelle.

3. Circuit suivant l'une des revendications précédentes,
**caractérisé**
**en ce que** le seuil (Sch) de commutation est alimenté par une compensation (Tk) de température et/ou par une compensation (Fk) de tension directe.

4. Circuit suivant l'une des revendications précédentes,
**caractérisé**
**en ce que** la première source de courant prévue pour la prescription du courant parallèle a des moyens pour faire passer un courant de manière à ce que, pour l'énergie extérieure injectée maximum à laquelle on peut s'attendre, la tension s'établissant aux bornes de la au moins une diode (D) électroluminescente est plus petite que la tension directe de la diode (D) électroluminescente.
